# EUROPEAN PATENT SPECIFICATION

(11) **EP 1 337 473 B1**
(45) Date of publication and mention of the grant of the patent: **07.07.2004**
(21) Application number: 01971727.1
(22) Date of filing: 28.09.2001
(51) Int. Cl.: C02F 1/461, C02F 5/00, C25B 9/04

(54) **ELECTROCHEMICAL CELL AND ELECTROCHEMICAL TREATMENT OF CONTAMINATED WATER**
ELEKTROCHEMISCHE ZELLE UND ELEKTROCHEMISCHE BEHANDLUNG VON KONTAMINIERTEM WASSER
CELLULE ELECTROCHIMIQUE ET TRAITEMENT ELECTROCHIMIQUE D'EAUX CONTAMINEES

(30) Priority: 29.09.2000 DK 200001445
(43) Date of publication of application: 27.08.2003
(73) Proprietor: HOH Water Technology A/S, 2670 Greve (DK); DHI Vand & Miljo, 2970 Horsholm (DK); Ramboll, Hannemann & Hojlund A/S, 2830 Virum (DK)
(72) Inventor: LEHMANN, Nikolaj, K., J., DK-2800 Lyngby (DK); NIELSEN, Charlotte, DK-2960 Rungsted Kyst (DK)
(74) Representative: Plougmann & Vingtoft A/S
(86) International application number: PCT/DK2001/000626
(87) International publication number: WO 2002/026635

(56) References cited:
- WO-A-00/68153
- WO-A-01/44125
- US-A- 3 888 756
- US-A- 4 072 596
- US-A- 4 690 741
- US-A- 5 558 755
- US-A- 5 972 181
- US-A- 6 045 707
- DATABASE WPI Section Ch, Week 199728 Derwent Publications Ltd., London, GB; Class D15, AN 1997-308963 XP002902219 & RU 2 069 187 C (UNIV VOLG TECH), 20 November 1996 (1996-11-20)

## Description

### FIELD OF THE INVENTION

The invention concerns a reactor for cleaning of water contaminated by a number of compounds, among others chlorinated organic compounds, aromatic- and aliphatic hydrocarbons and MTBE by the use of an electrochemical process. The reactor may be used for cleaning of groundwater, which is pumped up to the ground level, as well as for in situ groundwater cleaning, i.e. the cleaning takes place in the groundwater zone (at a subterranean level). The present invention may also be used for cleaning other type of contaminated waters.

### BACKGROUND OF THE INVENTION

Traditionally, active carbon filtration, biological cleaning, aeration or UV-cleaning techniques have been used for cleaning of contaminated by organic substances.

By in situ cleaning of groundwater contaminated by organic substances, conventional techniques such as reactive walls, stimulated biological decomposition, air sparging or injection of oxidising or reducing chemicals are normally used.

Electrochemical cleaning e.g. is used for cleaning of swimming pool water, specific industrial wastewater and process water, and for groundwater with addition of chemicals (H₂O₂).

EP 0 997 437 A2 describes a reactor for cleaning of wastewater. The reactor comprises a series of plate-shaped anodes and cathodes (intended for direct current (DC)) arranged in interconnected units. The reactor is further equipped with a processor for regulating the flow of the wastewater in response to the conductivity in the units.

GB 2 202 862 A describes the electrochemical degradation of organic contaminants in groundwater by embedding a grid work of rods in the ground. A voltage (DC) is applied to the plurality of spatially separated, opposite charged rods.

US 5,879,555 describes a method of treatment of materials (e.g. contaminated groundwater) with the use of a sacrificial metal and reducible ions in an electrochemical process where a direct current (DC) is applied.

DE 43 06 846 A1 describes a method for electrochemical treatment of contaminated groundwater by an electrochemical process in which an oscillating direct current is applied.

US 5,868,941 describes the treatment of contaminated groundwater by a process in which the groundwater is allowed to pass through a bed of granular iron. The ions used for degradation of the contaminants are provided by a DC power supply.

WO 97/28294 describes in situ electrochemical remediation of organically contaminated groundwater by using an electrochemically generated and delivered Fenton's reagent.

The electrochemical current is a DC current.

US-6 045 707 or US-4 072 596 disclose a method and a system involving an electrochemical reactor with AC supply and comprising two sets of electrodes and two conductors connected to each other.

### DESCRIPTION OF THE FIGURES

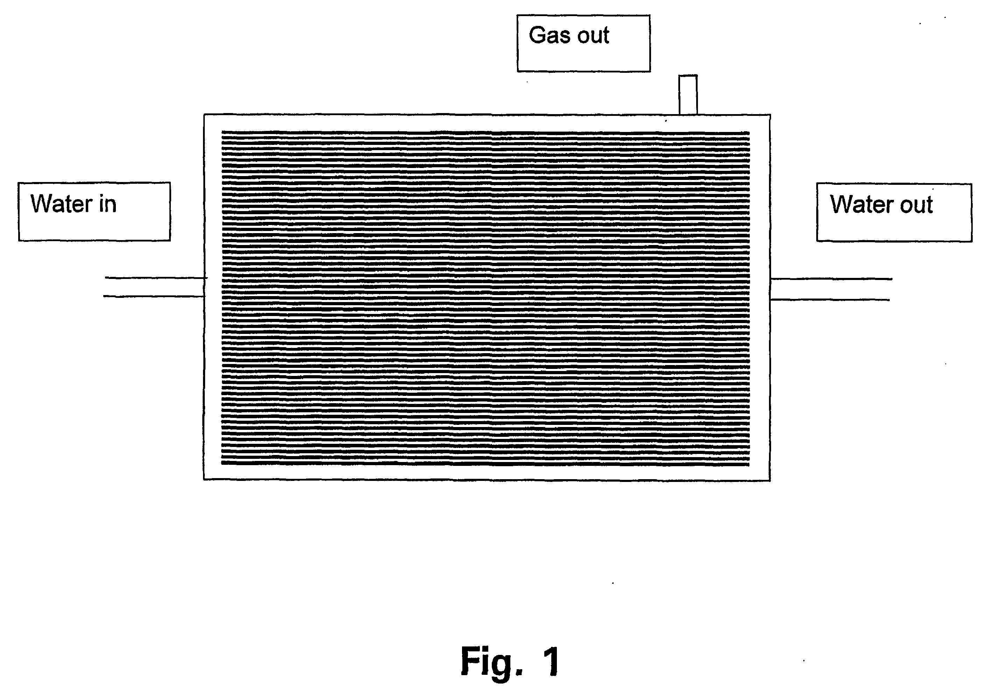

Figure 1. Example of a reactor design. The water flows parallel to the electrodes. Electrodes are fixed and the gas produced is lead out through the top. The electrodes are connected electrically, so that every second electrode is connected to the one conductor and the other electrodes are connected to the other conductor.

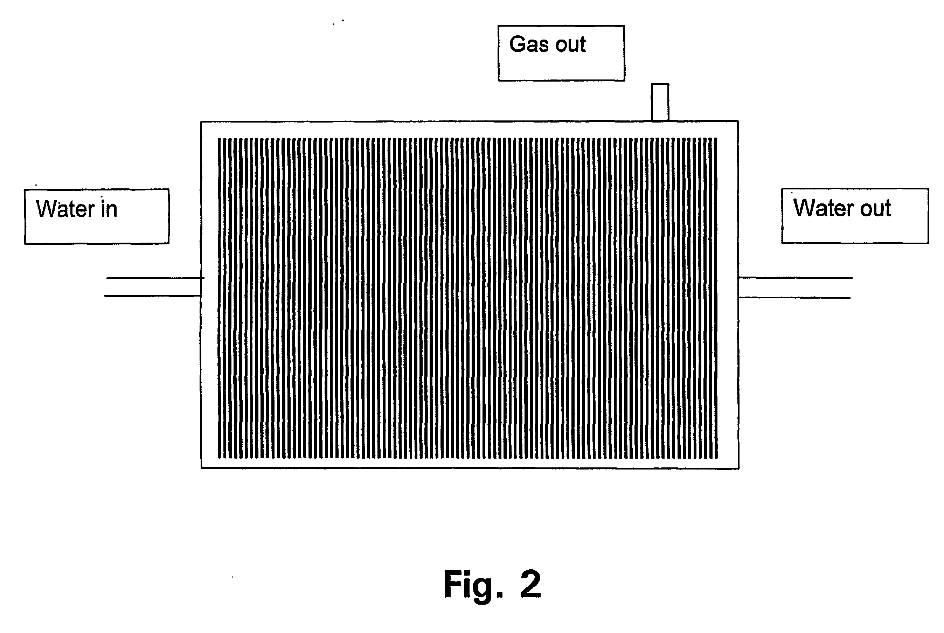

Figure 2. Example of a reactor design. The water flows in right angle to the electrodes. Electrodes are fixed and the gas produced is lead out through the top. The electrodes are connected electrically, so that every second electrode is connected to the one conductor and the other electrodes are connected to the other conductor.

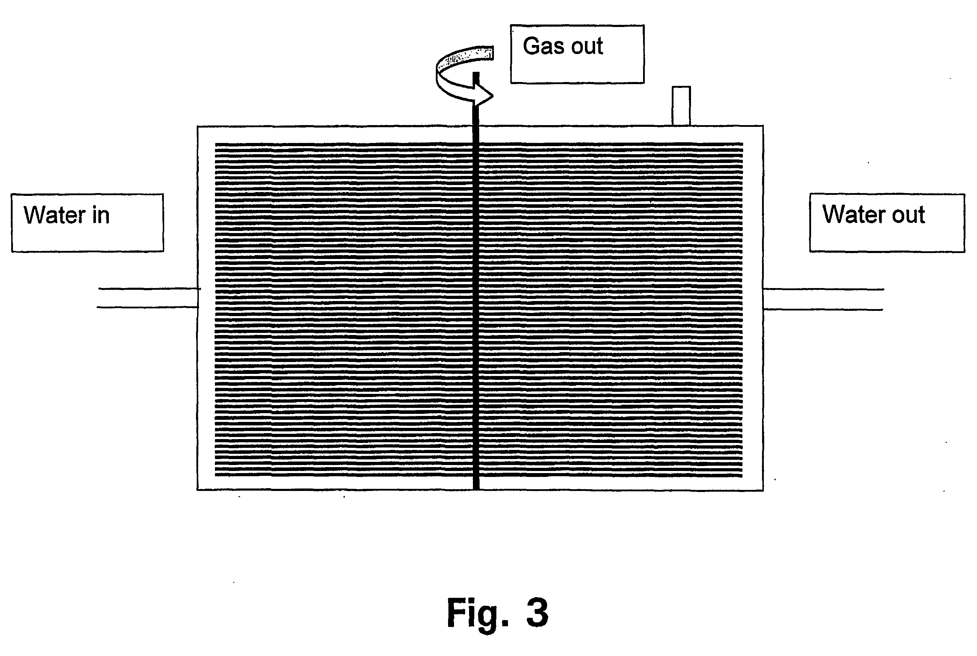

Figure 3. Example of reactor design. The water flows parallel to the electrodes. Electrodes are rotating in order to create more turbulent flow in the reactor. The gas produced is lead out through the top. The electrodes are connected electrically, so that every second electrode is connected to the one conductor and the other electrodes are connected to the other conductor.

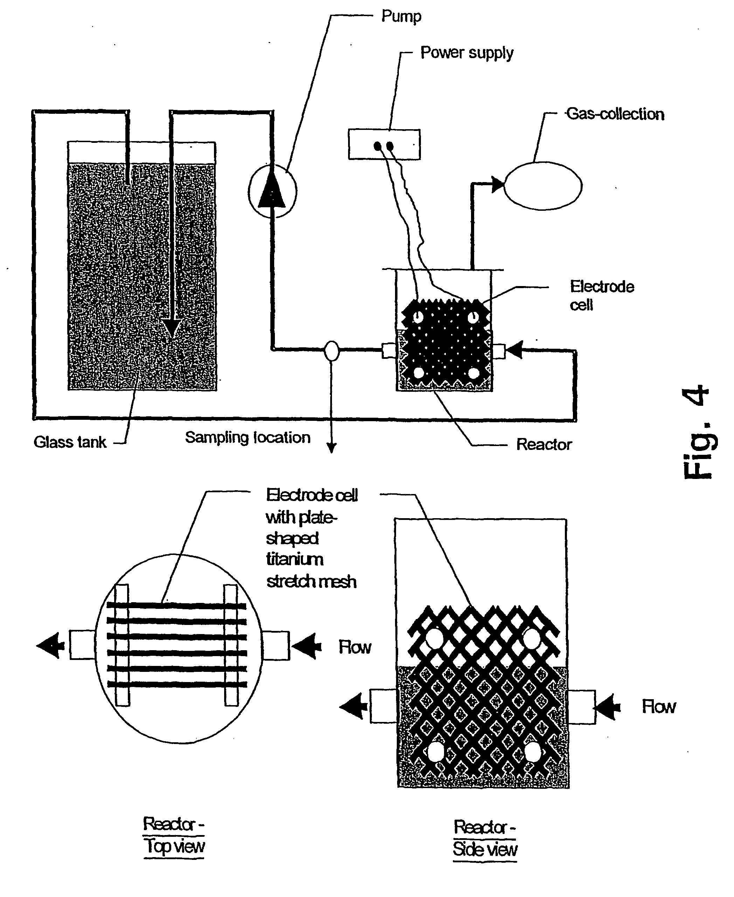

Figure 4. A schematic illustration of the laboratory reactor set-up.

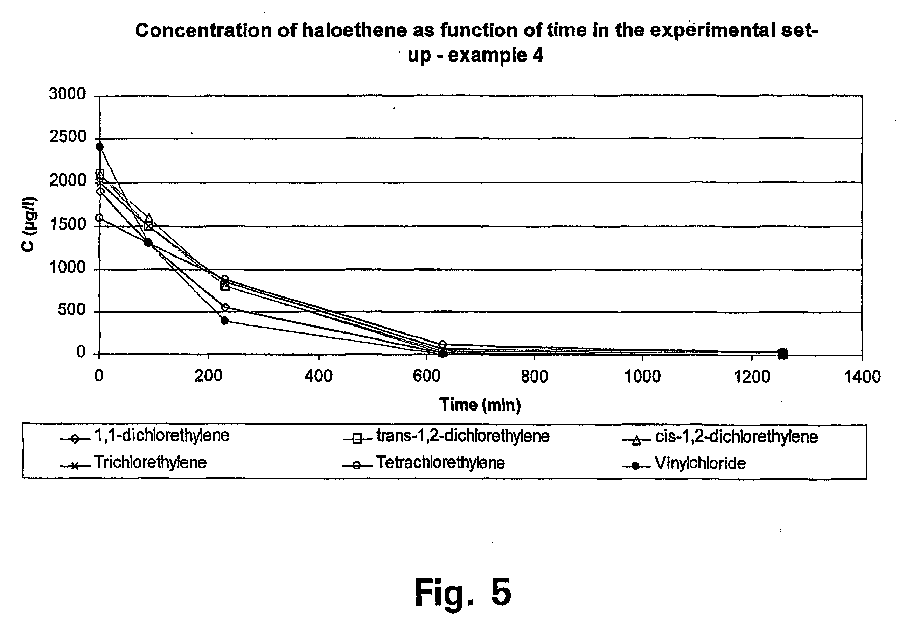

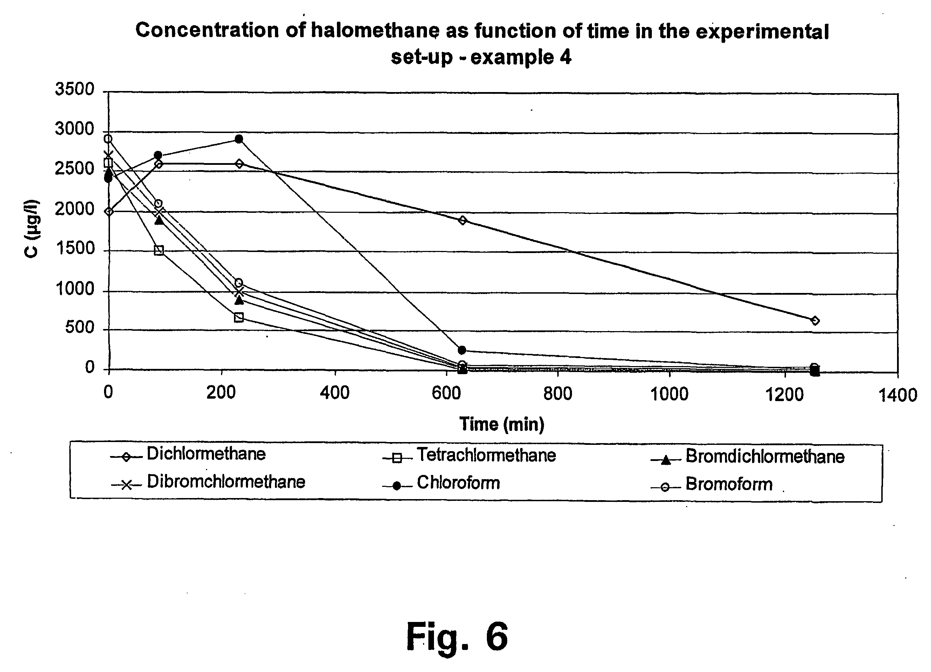

Figures 5 and 6. Result of experiment with several organic compounds (Example 4). Concentrations of selected compounds in the experimental set-up as function of time. The concentration of some of the compounds is increasing initially due to the fact that these compounds probably are the degradation products of other compounds.

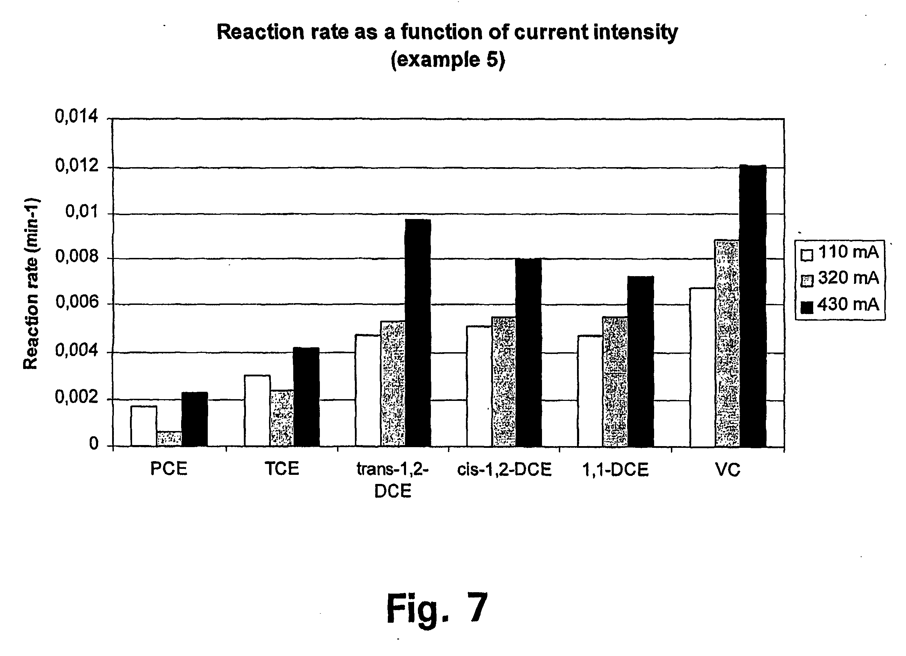

Figure 7. Reaction rates for chlorinated compounds found with different current intensities in the experimental set up (as described in Example 5). PCE (tetrachloroethylene), TCE (trichloroethylene), cis-1,2-DCE, trans-1,2-DCE (cis- and trans-1,2-dichloroethylene) and VC (vinylchloride).

### BRIEF DESCRIPTION OF THE INVENTION

One well-known problem in electrochemical processes is the deposition of insoluble inorganic compounds on the electrodes, especially in environments and geographical areas where the groundwater to be treated contains ions susceptible to precipitate, as in the case of "hard" water (i.e. high content of calcium and magnesium ions).

In view of the above, there is still a need for techniques for cleaning of contaminated water by preventive measures as well as by recovery/employment of contaminated groundwater.

The present reactor can be used for decomposing organic and inorganic substances in contaminated water and differs from other known technologies in this area by using an electrochemical process with alternating current whereby the operation is optimised by dynamic control of the period in the alternating current based on measuring of operating data.

However, the reactor may also be used generally for sterilisation of water.

The reactor uses an electrochemical process without the need for addition of chemicals. However, in some cases addition of chemicals can be considered, e.g. if the conductivity is very low, or if there is not enough chloride for the desired disinfection of the water.

The invention can be used for cleaning of water contaminated by substances, e.g. chlorinated solvents or gasoline components such as aromatic hydrocarbons and MTBE. The invention may also be used for disinfecting micro-organisms in water.

### DETAILED DESCRIPTION OF THE INVENTION

### Definitions

As mentioned above, the present invention is useful for cleaning contaminated water. The term "contaminated water" is intended to mean water of any origin that contains undesirable components. Examples of such undesirable components are organic compounds (i.e. chlorinated, aromatic, aliphatic etc), microorganisms and inorganic compounds (i.e. cyanide).

Examples of various types of water that can be treated by the invention are groundwater and surface water contaminated with organic compounds, groundwater and surface water contaminated with microorganisms, sewage water, drinking water and clinical, domestic and industrial waste-water.

Types of water which are particularly relevant to consider in the present context are groundwater and surface water.

In the present context, the term "alternating current" is intended to mean a electric current which in an alternating fashion changes direction over time. The change may be "harmonic" like in domestic power supplies (except that the period of the alternating current is much longer than in 50/60 Hz domestic power supplies), square-like or triangular shaped waves/pulses, etc. Although it has not been tested so far, it is also possible to imagine that the current may be "broken off' for a short period before application of an alternate pulse.

The present invention solves a problem which is particularly predominant where the water is hard (high content of calcium or/and magnesium) or water containing higher amounts of ions susceptible to precipitate.

### The process

One feature of the present invention is the application of alternating current with dynamical control of the period thereof. It has been found that direct current causes precipitation to occur (e.g. carbonates) on the cathode due to the high pH values at the surface thereof, especially in case of hard water. By using alternating current, precipitation on the electrodes is suppressed, keeping a clean and effective electrode surface area and thus ensuring energy economical and environmentally correct operation.

In the experiments performed so far, an influence of the length of the period of the alternating current on the process efficiency has been observed. The period should not exceed 2 hours. Often the period has a length of 2 to 240 seconds. The currently most promising interval appears to be 2 to 20 seconds.

Tests have shown that the higher current used the shorter the periods of the alternating current have to be in order to prevent precipitation on the electrodes. Reducing the period of the alternating current from 240 seconds to 40 seconds increased the normalised reaction rate for trichloroethylene (TCE) from 12 to 18 l/(h.m²) (the reaction rate is normalised with respect to the volume of treated water in litre and electrode area in square meters). A shorter period of the alternating current than 20 seconds has also shown at high current to limit the production of undesirable components like chloroform, which is believed to be the result of reaction between organic matter in the water and chlorine gas produced in the process under high current. No lower limit has been decided on for the alternative current period. However using very short periods in the range lower than milliseconds may reduce the process efficiency due to capacitor effect in the electrodes.

With respect to the level of the current a typical value of 1 mA/cm² is applied, but depends on the concentrations of contaminants, the conductivity of the water and the distance between the electrodes.

This being said, the level of voltage will in turn depend on the current applied.

The decomposition of contaminants takes place in accordance with a 1^{st} order process at low to moderate concentrations. It is believed, but however not yet verified, that the decomposition of contaminants follows a zero order process at high concentration. The process can be used both for pumped up groundwater and in situ groundwater cleaning. In the latter instances, the reactor will be placed in the groundwater zone where the contaminated water flows through the reactor.

### The reactor

The reactor for cleaning of contaminated water may be of the conventional type, e.g. following the principles outlined in EP 0 997 437 A2, where the water will be led through the reactor making it flow parallel or in right angle with the electrodes, i.e. as illustrated i Figure 1 and 2.

Alternatively the electrodes in the reactor can be installed so as they are able to rotate, as illustrated in Figure 3. This application is known to favour mass transport of contaminants to the electrode surface, which often is the limiting factor in the overall process.

The electrodes of the reactor are typically made of any conductive materials such as carbon, titanium, platinum or other noble metals. The electrodes are preferably made of a non-corrosive material. The electrodes may be coated with noble metals or mixed metal oxides (MMO) in order to increase the process rate catalytically. A titanium or platinum stretch mesh coated with specific noble metals appears to be a particularly suitable electrode material. MMO refers to a class of mixed metal oxide coatings for catalytic purposes. Since such electrode materials are often prepared by proprietary processes, the exact composition is normally not known.

The reactor normally comprises two sets of electrodes and typically two conductors through which the alternating current is applied. The electrodes are connected electrically, so that the electrodes of the one set of electrodes are electrically connected to the one conductor and the electrodes of the other set of electrodes are electrically connected to the other conductor. In such a reactor, the electrodes may be plate-shaped, circular, rod shaped, etc. and electrodes from the two sets of electrodes may be arranged coaxially. The conductors and the electrodes may be arranged in a container, or may be placed in an underground "pocket", that is the underground "pocket" may constitute the walls of the reactor. Typically, however, the conductors and the electrodes are arranged in a container in order to ensure that their mutual spacing is maintained during operation.

In a particularly important embodiment, the reactor contains closely set, plate-shaped electrodes, in particular stretch mesh electrodes, in particular a titanium or platinum stretch mesh, with or without coating (noble metals, MMO or other similar qualities), as an electrode material.

Other conducting materials, however, may also be used. Using stretch mesh instead of plates causes the water flow to be more turbulent in the reactor, thus facilitating transport of the organic compounds to the electrode surface where reaction occurs. This is very important since the limiting factor in decomposing the contaminants in many cases is mass transport of the contaminants to the electrode surface. Rotating electrodes are also a means for providing mass transport of contaminants to the electrode surface.

The stretch mesh electrodes are placed vertically or horizontally in the reactor. The water flows parallel or in right angle to the electrodes inside the reactor

The cover of the reactor is fabricated in a way that makes it possible to drain off the gas created from the process through an air purging device at the top of the reactor, or together with the treated water.

The overall dimensions of the reactor, i.e. total volume, electrode surface area, distance between electrodes and number of electrodes, depend on the type, amount and composition of the water to be treated.

In view of the above, the present invention also provides an electrochemical reactor system comprising one or more reactor(s) and a power supply providing an alternating current as defined in claim 6. An example of a reactor system is illustrated in Figure 4. Figure 4 illustrates a reactor system comprising only one reactor. It is however believed that two or more such as 2-50 reactors can be arranged in parallel.

The present invention further provides the use of an electrochemical reactor system as defined herein for cleaning of water contaminated by organic or inorganic substances.

### Applications

The period of the alternating current is controlled dynamically from operating data for the purpose of optimising the operation. Parameters such as conductivity in the raw water, the electrical potential in the reactor, the current through the reactor and the voltage used for actuating the current can form part of the dynamic control of the period in the alternating current.

The reaction rate seems to increase with the increasing current load. It is indistinct whether this is due to the current, the increased turbulence caused by gas generation, or a combination of both.

The conductivity of the water is an important parameter. The optimum current load and the period of the alternating current shall not be fixed on basis of the reaction rate alone, but also in comparison to formation of inappropriate products (chloroform, etc.)

The rate of decomposition for contaminants varies, i.a. depending on the current load The observed removals of chlorinated hydrocarbons and aromatic hydrocarbons are over 90%. The rate of decomposition for the various substances has been found to be in the interval 3-150 l/(h.m²) using an electrode spacing of 5 mm.

The rate of decomposition increased with the water velocity past the electrodes. In order to ensure a high water velocity between the electrodes in a reactor, it may be of advantage to re-circulate the water, so that the largest part of the discharge water from the reactor is led back through the reactor together with the raw water, and only a smaller partial flow of the treated water is discharged.

By supplementing the electrochemical reactor with an ultrasound source the process rate is expected to increase.

### EXAMPLES

The process involved in the invention has been studied using a reactor on a laboratory scale. The reactor was made of a glass vessel with a volume of 400 ml in which an electrode cell was placed. The electrode cell was made of 6 plate-shaped titanium stretch mesh placed in parallel, each with a surface area of 42 cm². The total electrode area was 252 cm². The electrodes were connected electrically, so that every second electrode is connected to one conductor and the other electrodes to the other conductor. The electrode spacing was 5 mm. At the inlet the reactor is connected to a 2 litres batch glass tank through Teflon tube. The outlet is connected through Teflon tube to a peristaltic pump, which in turn is connected to the glass tank. The system was thus closed in order to simulate a batch system with a flow through the reactor, the flow being parallel to the electrodes plate, see Figure 4.

In each experiment the system was filled with water so as the water level in the reactor covered 2/3 of the total electrode area, leaving some headspace in the reactor. The headspace in the glass tank was negligible. The top of the reactor and in some cases the glass tank was provided with a device to eventually collect gas produced in excess during the process. The total volume of water in the system was about 2.7 L and the effective surface area of the electrode 168 cm² (surface area in contact with water).

The experiments described in the following were conducted with the above mentioned laboratory set-up and performed at room temperature and in absence of light. Sampling of water from the system was performed prior to process initiation to settle initial concentration. Monitoring of the process effect was performed by taken out samples as function of time after process initiation. Control experiments were also performed without initiating the process. The water samples were analysed with the Purge & Trap method.

### Reference example - Experiment using Direct Current (DC)

The process effect was investigated on tap water solutions containing 3-4 mg of trichloroethylene (TCE) per litre. Experiments were conducted over a period of 48 hours using a potentiostatic DC-current of 900 mV corresponding to a current of about 100 mA (corresponding to 0.6 mA.cm⁻²). Concentration profiles showed a significant decrease in TCE compared to the control experiment, and the removal could be described as a 1^{st} order reaction. The reaction rates were about 0.006-0.012 per hour (h⁻¹) or when normalised to volume treated and effective surface area 0.96 -1.9 Litre per square meter per hour (L.m⁻².h⁻¹). During the experiments the electric current showed a rapid decrease to a value of 2-3 mA (corresponding to 0.01 mA.cm⁻²) about two hours after initiation, where it remained. The decrease in current was related to an increase in electric resistance between the electrode, due to precipitation on the cathodes. Removal efficiency in those experiments was around 50%.

### Example 1 - Experiment using Alternating Current

Using the above described set-up an experiment was conducted using an alternating current of 0.6 mA.cm⁻² and a period for the alternating current of 4 min. Initial trichloroethylene concentration in tap water was about 3 mg/L. After 48 hours the concentration was reduced to about 0.1 mg/l, and the removal efficiency was therefore 97%. The reaction followed a 1^{st} order reaction (r²>0.99) with a calculated normalised reaction rate of 12 L.m⁻².h⁻¹. The electrodes showed signs of carbonate precipitation on the surface at the end of the experiment.

### Example 2 - Experiment using alternating current with shorter period

An experiment similar to the one described in example 1 was performed, however with a shorter period for the alternating current of 40 seconds. The initial concentration in the tap water was about 4.5 mg trichloroethylene/L. The removal efficiency after 21 hours was 92% and the overall normalised reaction rate 18 L.m⁻².h⁻¹, showing a slightly higher removal with shorter period for the alternating current.

### Example 3 - Increasing current intensity

Several experiments similar to the one described in Example 2, and with same range of initial TCE-concentrations in the tap water were conducted using a alternating current and increasing current. Higher reaction rates were found with higher current as shown in Table 1. At 5.1 mA.cm⁻² (highest current used) the normalised reaction rate was 45 L.m⁻².h⁻¹ or about 4 times higher than at 0.6 mA.cm⁻². Increasing the current intensity resulted also in the production of other unwanted halogenated organic compounds like chloroform, bromoform, bromodichloromethane and dibromochloromethane. High current intensity results in strongly oxidising conditions at the anode, which leads to the production of chlorine and bromine gas from oxidation of chloride and bromide ions in the water. The presence of halogenated by-products is believed to be due to reaction between chlorine/bromine gas and natural organic matter in the water.

**Table 1.**

| Reaction rates at different current intensity. | | | | |
|---|---|---|---|---|
| Current intensity (mA.cm⁻²) | 0,6 | 1,3 | 1,8 | 5,1 |
| Reaction rate (L.h⁻¹ .m⁻²) | 18 | 29 | 36 | 45 |

### Example 4 - Experiment with several organic compounds

An experiment was conducted at an alternating current density of 3.2 mA.cm⁻² and a period of 40 seconds on water containing a broad range of different organic pollutants. These included chlorinated and brominated organic compounds, benzene, chlorinated and methylated benzene, toluene, ethylbenzene, xylene, naphthalene and MTBE. The concentrations of all compounds decreased with time as a result of the process, see Table 2. Figure 5 and 6 shows the concentrations of some of the above-mentioned compounds in the experimental set-up as a function of time. After 20 hours the removals of most compounds were more than 90% of initial concentration, and half of these were over 99%. Normalised reaction rates were found in the interval 3-154 L.m⁻².h⁻¹, the highest rate being found for m/p-xylene. The experiment showed also that the process degrades the above mentioned by-products. Except for a few compounds correlation to a first order reaction was very good in all cases. Poorer correlation was found for compounds that were removed to a lesser extent and therefore with lower reaction rates. The poorer correlations and removals were due to an increase in concentrations at the beginning of the experiment, see Figure 6. Some of the compounds were believed to be the degradation products of other compounds.

**Table 2.**

| Results of the experiment describe in example 4. | | | | |
|---|---|---|---|---|
| Compound | Initial concentration µg/l | Removal efficiency % | Reaction rate L.h⁻¹.m⁻² | Correlation with 1st order r² |
| Tetrachloroethylene | 1600 | 98,1 | 42 | 0,98 |
| Trichloroethylene | 2000 | 98,2 | 54 | 0,99 |
| cis-1,2-DCE | 2100 | 98,9 | 65 | 0,98 |
| tran-1,2-DCE | 2100 | 99,9 | 83 | 0,97 |
| 1,1-DCE | 1900 | 99,8 | 85 | 0,98 |
| Vinylchloride | 2400 | 99,9 | 125 | 0,98 |
| Tetrachloromethane | 2600 | 99,7 | 77 | 0,99 |
| chloroform | 2400 | 98,8 | 37 | 0,84 |
| Bromoform | 2900 | 98,3 | 60 | 0,99 |
| Bromdichloromethane | 2500 | 99,3 | 69 | 0,98 |
| Dibromchloromethane | 2700 | 98,8 | 67 | 0,98 |
| Dichloromethane | 2000 | 67 | 3 | 0,19 |
| 1,1,2,2-tetrachloroethane | 2900 | 99,4 | 43 | 0,89 |
| 1,1,2-trichloroethane | 2500 | 92 | 15 | 0,84 |
| 1,1,1-trichloroethane | 2400 | 99,5 | 63 | 0,94 |
| 1,2-dichloroethane | 2600 | 53,8 | 5 | 0,56 |
| 1,1-dichloroethane | 2100 | 92,9 | 14 | 0,86 |
| 1,2-dibromethane | 2600 | 99,7 | 84 | 0,92 |
| 1,2-dichloropropane | 2100 | 81,9 | 13 | 0,89 |
| cis-1,3-dichloropropene | 2200 | 99,9 | 125 | 0,95 |
| tran-1,3-dichloropropene | 2400 | 99,9 | 125 | 0,95 |
| Benzene | 1700 | 98,2 | 31 | 0,85 |
| Chlorobenzene | 2100 | 98,6 | 50 | 0,93 |
| Ethylbenzene | 1800 | 99,6 | 79 | 0,92 |
| 1,3,5-trimethylbenzene | 1300 | 99,9 | 116 | 0,6 |
| 1,2,4-trimethylbenzene | 1400 | 99,9 | 125 | 0,98 |
| mp/xylene | 3400 | 99,9 | 154 | 0,93 |
| o-xylene | 1900 | 99,9 | 145 | 0,91 |
| Naphtalene | 1700 | 99,8 | 125 | 0,96 |
| MTBE | 1000 | 52 | 7 | 0,8 |

### Example 5 - Experiment with contaminated water

Using the same laboratory reactor, experiments were conducted with groundwater contaminated with especially cis- and trans-1,2-dichloroethylene (cis-1,2-DCE, trans-1,2-DCE) and vinylchloride (VC). Compared to the tap water used in the other experiments, the groundwater had a higher conductivity with a particularly high chloride ion concentration. The experiments were performed at 3 different current intensities (0.6; 1.9 and 2.6 mA.cm⁻²) over a period of about 10 hours. The removal efficiency for the above-mentioned compounds were >90%. VC was removed from an initial concentration of about 250 µg/l to <1 µg/l. The results of the experiment showed a positive correlation between current intensity and normalised reaction rate (see Figure 7), which increased from 45 to 94 L.m⁻².h⁻¹ for trans-1,2-DCE, from 49 to 77 L.m⁻².h⁻¹ for cis-1,2-DCE and from 65 to 117 L.m⁻².h⁻¹ for VC. The correlation is believed to be the result of a higher turbulence in the system due to increased gas-production at higher current intensities. Electrochemical processes are often governed by mass transfer from bulk to electrode (Liu et al., 1999), and higher turbulence will decrease the transport time and thereby increase the overall reaction rate. Using a current of 0.6 mA.cm⁻² did not lead to any production of unwanted by-product. The use of 1.9 and 2.6 mA.cm⁻² did, however, result in a significant production of chloroform, bromodichloromethane, dibromochloromethane and dichloromethane, due to the creation of potentials that promote chlorine and bromine gas, as a result of the high currents.

### Example 6 - Effect on microbiology

Groundwater has a natural content of microorganisms. When contaminated with organic compounds, the content of microorganism usually increases due to biodegradation. An experiment was conducted with the above mentioned contaminated water at a current intensity of 2.6 mA.cm⁻². The heterotrophic plate count (HPC) at 21°C and 37°C in the groundwater prior to process initiation was respectively 2.700 and 700 CFU (colony forming unit). After 6 hours of processing, the HPC at 21 °C and 37°C in the groundwater was < 0.5 CPU showing a disinfecting effect of the process.

### Example 7 - Effect of the period of the alternating current

An experiment was performed using the contaminated water and a current intensity of 1.9 mA.cm⁻². Compared to previous experiments described in example 1-5 the period of the alternating current was 4 seconds (or ten times shorter). The experiment was run for 6 hours. The results were very similar to the previous experiment performed at the same intensity and a longer period of the alternating current (Example 5) with respect to obtained reaction rates. However no significant production of unwanted by-products could be ascertained, showing that the use of a short period of the alternating current apparently prevents the built up of a potential that can promote chloride/bromide oxidation into chlorine/bromine gas, which reacts with organic matter to produce the unwanted products.

### Summary

The Table below summarises the results of experiments, describing the main characteristics of the process.

| | | |
|---|---|---|
| Effect on organic compound | The process is effective for the degradation of trichloroethylene. A broad range of other organic compound is degradable by the process. | Examples 1, 2, 3, 4, 5 and 7 |
| Effect on microbiology | The process can also be used for disinfection of water. | Example 6 |
| Effect of period of alternating current | alternating current prevents precipitation of minerals on electrode surface. Too long periods in the alternating current increase the risk of precipitation, while too short period is believed to reduce the process efficiency. | Examples 1, 2 and 7 |
| Effect of current | Higher current intensity increases the reaction rate. At very high current intensities unwanted products are produced | Examples 3 and 5 |

## Claims

1. A process for cleaning of water contaminated by organic or inorganic substances, said process involving an electrochemical reactor, wherein alternating current is applied, the period of the said alternating current being in the range of 2 seconds to 2 hours, said process being optimised by dynamically controlling the period of the alternating current based on the measurement of operating data such as conductivity, current, voltage and electrical potential in the reactor said reactor comprising two sets of electrodes, wherein the electrodes are connected electrically, so that every second electrode is electrically connected to the one conductor and the other electrodes are electrically connected to the other conductor, the alternating current being applied to the two conductors at least some of the electrodes of the reactor being made of a non-corrosive conductive metal.

2. A process according to any of the preceding claims, wherein the non-corrosive conductive metal is titanium or platinum in the form of a stretch mesh.

3. A process according to any of the preceding claims, wherein the electrodes are surface coated with noble metals or mixed metal oxides.

4. A process according to any of the preceding claims, wherein the electrochemical process is conducted essentially without addition of chemicals for decomposition of the contaminants.

5. A process according to any of the preceding claims, wherein the electrodes are placed vertically or horizontally and where the water flows parallel or In right angle to the electrodes.

6. An electrochemical reactor system comprising one or more reactor(s), a power supply providing an alternating current, and means for controlling the period of the alternating current based on the measurement of operating data such as conductivity, current, voltage and electrical potential in the reactor, each of the reactors comprising two sets of electrodes and two conductors through which the alternating current is applied, the electrodes being connected electrically to the conductors, in such a manner that the electrodes of the one set of electrodes are electrically connected to the one conductor and the electrodes of the other set of electrodes are electrically connected to the other conductor, at least some of the electrodes of the reactor being made of a non-corrosive conductive metal.

7. A reactor system according to claim 6, wherein the non-corrosive conductive metal is titanium or platinum in the form of a stretch mesh.

8. A reactor system according to any of claims 6-7, wherein the electrodes are surface coated with noble metals or mixed metal oxides.

9. The use of an electrochemical reactor system as defined in any of the claims 6-8 for cleaning of water contaminated by organic or inorganic substances.

10. The use according to claim 9, wherein the process according to any of claims 1-5 is utilised.

## Patentansprüche

1. Verfahren zur Reinigung von mit organischen oder anorganischen Substanzen kontaminiertem Wasser, bei welchem Verfahren ein elektrochemischer Reaktor benutzt wird, an welchen ein Wechselstrom angelegt wird, wobei die Periodendauer des Wechselstromes von 2 Sekunden bis 2 Stunden beträgt, und wobei das Verfahren durch dynamisches Regeln der Periodendauer des Wechselstromes aufgrund von Messungen von Betriebsdaten, wie z.B. der Leitfähigkeit, des Stroms, der elektrischen Spannung und des elektrischen Potentials in dem Reaktor, optimiert wird, wobei der Reaktor zwei Sätze von Elektroden umfaßt, worin die Elektroden in einer solchen Weise elektrisch verbunden sind, daß jede zweite Elektrode elektrisch mit dem einen Stromleiter verbunden ist, und die übrigen Elektroden mit dem anderen Stromleiter elektrisch verbunden sind, wobei der Wechselstrom an beide Stromleiter angelegt wird, und wobei wenigstens einige der Elektroden des Reaktors aus korrosionsbeständigem, leitendem Metall hergestellt sind.

2. Verfahren nach jedem der vorhergehenden Ansprüche, wobei das korrosionsbeständige Metall Titan oder Platin in der Form von Streckmetall vorliegt.

3. Verfahren nach jedem der vorhergehenden Ansprüche, wobei die Elektroden mit Edelmetallen oder gemischten Metalloxiden beschichtet sind.

4. Verfahren nach jedem der vorhergehenden Ansprüche, wobei das elektrochemische Verfahren im wesentlichen ohne Zusatz von Chemikalien zum Abbau der kontaminierenden Substanzen durchgeführt wird.

5. Verfahren nach jedem der vorhergehenden Ansprüche, wobei die Elektroden vertikal oder horizontal angeordnet sind, und wobei das Wasser parallel oder senkrecht zu den Elektroden fließt.

6. Elektrochemisches Reaktorsystem umfassend einen oder mehrere Reaktor(en), eine einen Wechselstrom bereitstellende Energieversorgung und eine Einrichtung oder Einrichtungen zum Regeln der Periodendauer des Wechselstromes aufgrund von Messungen von Betriebsdaten, wie z.B. der Leitfähigkeit, des Stroms, der elektrischen Spannung und des elektrischen Potentials in dem Reaktor, wobei jeder der Reaktoren zwei Sätze von Elektroden und zwei Stromleiter, durch die der Wechselstrom angelegt wird, umfaßt, wobei die Elektroden in einer solchen Weise elektrisch mit den Stromleitern verbunden sind, daß die Elektroden des einen Satzes von Elektroden mit dem einen Stromleiter elektrisch verbunden sind, und die Elektroden des anderen Satzes von Elektroden mit dem anderen Stromleiter elektrisch verbunden sind, wobei wenigstens einige der Elektroden des Reaktors aus korrosionsbeständigem, leitendem Metall hergestellt sind.

7. Reaktorsystem nach Anspruch 6, worin das korrosionsbeständige, leitende Metall Titan oder Platin in der Form von Streckmetall vorliegt.

8. Reaktorsystem nach jedem der Ansprüche 6 oder 7, worin die Elektroden mit Edelmetallen oder gemischten Metalloxiden beschichtet sind.

9. Anwendung eines elektrochemischen Reaktorsystems, wie in jedem der Ansprüche 6 bis 8 definiert, zur Reinigung von mit organischen oder anorganischen Substanzen kontaminiertem Wasser.

10. Anwendung nach Anspruch 9, wobei das Verfahren nach jedem der Ansprüche 1 bis 5 angewandt wird.

## Revendications

1. Procédé de purification d'eau contaminée par des substances organiques ou inorganiques, lequel implique un réacteur électrochimique, dans lequel un courant alternatif est appliqué, la durée de la période du courant alternatif étant de l'ordre de 2 secondes à 2 heures et le procédé étant optimisé en réglant de façon dynamique la durée de la période du courant alternatif sur la base d'un mesurage de caractéristiques d'exploitation, tels que la conductibilité, le courant, la tension et le potentiel électrique dans le réacteur, lequel comprend deux ensembles d'électrodes, où les électrodes sont reliées électriquement d'une telle manière que toutes les deux électrodes soient reliées électriquement à l'un des conducteurs, et que les autres électrodes soient reliées électriquement à l'autre conducteur, le courant alternatif étant appliqué aux deux conducteurs, et quelques-unes des électrodes du réacteur au moins étant fabriquées d'un métal non-corrosif et conductible.

2. Procédé selon l'une quelconque des revendications précédantes, dans lequel le métal non-corrosif et conductible est le titane ou le platine sous forme de métal déployé.

3. Procédé selon l'une quelconque des revendications précédantes, dans lequel les électrodes ont un revêtement de métaux nobles ou d'oxydes métalliques mélangés.

4. Procédé selon l'une quelconque des revendications précédantes, dans lequel le procédé électrochimique est conduit essentiellement sans addition de substances chimiques pour la décomposition des contaminants.

5. Procédé selon l'une quelconque des revendications précédantes, dans lequel les électrodes son placé verticalement ou horizontalement et où l'eau s'écoule parallèlement ou perpendiculairement aux électrodes.

6. Système réacteur électrochimique comprenant un ou plusieurs réacteur(s), une source d'énergie fournissant un courant alternatif ainsi que des organes pour régler la durée de la période du courant alternatif sur la base d'un mesurage de caractéristiques d'exploitation, tels que la conductibilité, le courant, la tension et le potentiel électrique dans le réacteur, chacun des réacteurs comprenant deux ensembles d'électrodes ainsi que deux conducteurs, par lesquels le courant alternatif est appliqué, les électrodes étant reliées électriquement aux conducteurs d'une telle manière que les électrodes de l'un des ensembles d'électrodes soient reliées électriquement à l'un des conducteurs, et que les électrodes de l'autre ensemble d'électrodes soient reliées électriquement à l'autre conducteur, quelques-unes des électrodes du réacteur au moins étant fabriquées d'un métal non-corrosif et conductible.

7. Système réacteur selon la revendication 6, dans lequel le métal non-corrosif et conductible est le titane ou le platine sous forme de métal déployé.

8. Système réacteur selon l'une quelconque des revendications 6 ou 7, dans lequel les électrodes ont un revêtement de métaux nobles ou d'oxydes métalliques mélangés.

9. Utilisation d'un système réacteur électrochimique, tel que défini dans une quelconque des revendications 6 à 8, pour la purification d'eau contaminée par des substances organiques ou inorganiques.

10. Utilisation selon la revendication 9 mettant à profit le procédé selon l'une quelconque des revendications 1 à 5.
